(19) Europäisches Patentamt
European Patent Office
Office européen des brevets

(11) Veröffentlichungsnummer: **0 147 754**
**B1**

(12) **EUROPÄISCHE PATENTSCHRIFT**

(45) Veröffentlichungstag der Patentschrift: **15.07.87**

(51) Int. Cl.[4]: **B 60 T 8/60,** G 01 P 3/44

(21) Anmeldenummer: **84115519.5**

(22) Anmeldetag: **15.12.84**

(54) **Verfahren zur Umwandlung des Ausgangssignals eines Drehgeschwindigkeitsmesswertgebers in ein störungsarmes Signal.**

(30) Priorität: **16.12.83 DE 3345547**

(43) Veröffentlichungstag der Anmeldung: **10.07.85 Patentblatt 85/28**

(45) Bekanntmachung des Hinweises auf die Patenterteilung: **15.07.87 Patentblatt 87/29**

(84) Benannte Vertragsstaaten: **DE FR GB IT SE**

(56) Entgegenhaltungen:
**GB - A - 2 004 011**
**US - A - 3 520 575**

**IEEE TRANSACTIONS ON COMMUNICATION TECHNOLOGY, Band COM-19, Nr. 6, Dezember 1971, Seiten 1137-1141, New York, US; R.E. LAWRENCE u.a.: "The Kalman filter for the equalization of a digital communications channel"**

(73) Patentinhaber: **ROBERT BOSCH GMBH, Postfach 50, D-7000 Stuttgart 1 (DE)**

(72) Erfinder: **van Zanten, Anton. Dr.-Ing., Waldstrasse 15/2, D-7257 Ditzingen 1. (DE)**

(74) Vertreter: **Kammer, Arno, Dipl.-Ing., ROBERT BOSCH GmbH Zentralabteilung Patente Postfach 50, D-7000 Stuttgart 1 (DE)**

**EP 0 147 754 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Umwandlung eines in seiner Amplitude und Frequenz von einer zu ermittelnden Drehgeschwindigkeit abhängigen, störbehafteten sinusförmigen Ausgangssignals eines Drehgeschwindigkeitsmessgebers in ein störungsarmes Signal mit Hilfe eines Filters (GB-A-2 004 011).

Bei Antiblocker-Systemen wird die Radgeschwindigkeit gebraucht. Dazu wird in den herkömmlichen Systemen meist ein elektromagnetischer Messwertgeber eingesetzt. Dieser besteht aus einem Zahnkranz und einem Polstift. Der Zahnkranz ist am Rad befestigt und dreht sich mit dem Rad. Der Polstift ist an der Achse befestigt. Bei Raddrehung wird am Polstift eine Wechselspannung induziert. Die Frequenz der Wechselspannung wird von der Radgeschwindigkeit und von der Zähnezahl des Zahnkranzes bestimmt. Wenn ein Zahn des Zahnkranzes sich gegenüber dem Polstift befindet, so ist die Spannung positiv und umgekehrt, wenn eine Zahnlücke sich gegenüber dem Polstift befindet, so ist die Spannung negativ. Diese Eigenschaft wird nun so ausgenutzt, dass die Zeit zwischen zwei umgekehrt aufeinanderfolgenden Nulldurchgängen gemessen wird. Diese Zeit ist proportional zur Radgeschwindigkeit.

Für die Zeitmessung der Nulldurchgänge wird die Wechselspannung verstärkt und durch einen Begrenzer geschickt, welcher die Spannung nach oben und nach unten begrenzt. Der Verstärkungsfaktor ist sehr gross gewählt, so dass ein Rechtecksignal entsteht. Die Nulldurchgänge werden dann durch Spannungssprünge signalisiert. Damit Störungen in der Wechselspannung die Messung nicht beeinflussen, ist der Verstärkereingang mit einer Hysterese versehen.

Die Amplitude der Wechselspannung ist ausser von der Radgeschwindigkeit auch noch von dem Spalt zwischen Polstift und Zahnkranz abhängig. Die Amplitude der Wechselspannung nimmt mit der Radgeschwindigkeit zu und mit Spaltvergrösserung ab. Die Information, welche in dem Wechselspannungssignal enthalten ist, wird durch Spannungsbegrenzung im Verstärker zum Teil gelöscht. Ein Problem sind die Toleranzen, mit denen die Sensorteile gefertigt werden. Dadurch sind die Abstände zwischen den Zähnen des Zahnkranzes nicht exakt gleich, und es können bei hoher Geschwindigkeit grosse Sprünge in der berechneten Radgeschwindigkeit auftreten. Spezielle logische Entscheidungen, welche die physikalischen Gesetze berücksichtigen, begrenzen diese Sprünge und filtern auf diese Weise die Radgeschwindigkeit. Ein weiteres Problem sind Störungen, welche gerade die Eingangsschwelle des Verstärkers überschreiten. Wenn die Frequenz dieser Störungen gross ist, aber nicht gross genug, um als Störung bei der logischen Prüfung erkannt zu werden, dann wird diese Störung für die Radgeschwindigkeitsberechnung ausgewertet und das kann zum fehlerhaften Funktionieren des Antiblockierregelsystems führen.

Mit der vorliegenden Erfindung gemäss Anspruch 1 wird ein Verfahren angegeben, mit dem diese Störungen ausgeblendet oder zumindest gedämpft werden können. Dazu wird ein statischer Beobachter, ein sogenanntes Kalman-Filter, benutzt. Hauptbestandteile des Kalman-Filters sind die Simulation der dynamischen Raddrehung und die Nachbildung des Sensor-Wechselspannungssignals. Das Kalman-Filter berücksichtigt dabei durch die Simulation der Raddrehung automatisch die physikalischen Gesetze. Die Begrenzung des verstärkten Signals entfällt, so dass neben der Frequenz auch die Information, die in der Amplitude des Signals enthalten ist, nun vorteilhaft ausgewertet wird. Es wird ein genaueres Geschwindigkeitssignal ermittelt als es mit der herkömmlichen Messmethode möglich war. Dies hat zur Folge, dass grössere Toleranzen in der Herstellung der Sensorteile zugelassen werden können. Auch andere Zahnformen als die herkömmliche Zahnform mit rechteckigem Querschnitt, oder ganz andere Sensoren, deren Signale mathematisch gut nachgebildet werden können, sind erlaubt.

Weiter entfällt die nachgeschaltete Berechnung der Radbeschleunigung, da auch diese Grösse vom Kalman-Filter abgeschätzt wird. Das erfindungsgemässe Verfahren kann mit analogen und digitalen Schaltmitteln realisiert werden.

Anhand der Ausführungsbeispiele der Zeichnung wird die Erfindung näher erläutert. Es zeigen:

Fig. 1 ein erstes Ausführungsbeispiel der Erfindung, bei dem ein vorausberechneter konstanter Kalman-Verstärkungsfaktor unterstellt ist,

Fig. 2 ein Ausführungsbeispiel, bei dem der Kalman-Verstärkungsfaktor laufend neu berechnet wird.

Fig. 3-5 Diagramme zur Erläuterung.

In Fig. 1 gibt ein Sensor 1, 2 eine Spannung ab, welche hier proportional zu einer Radgeschwindigkeit sei. In einem Block 3 wird diese Spannung verstärkt und in einem Wandler 4 digitalisiert. Vom Sensorsignal $z(k+1)$ am Ausgang des Wanders 4 wird im Subtrahierer 5 ein simuliertes Messsignal $\hat{z}(k+1)$ abgezogen. Das Differenzsignal $\tilde{z}(k+1)$ wird mit dem Kalman-Verstärkungsfaktor K in einen Block 6 multipliziert. Das Produkt ist der geschätzte Fehler in der Simulation des Systemzustands $\tilde{x}(k+1/k)$. In einem Addierer 7 wird diese Korrektur zum simulierten Systemzustand $\hat{x}(k+1/k)$ addiert. Die Summe ist der geschätzte Systemzustand $\hat{x}(k+1/k+1)$ d.h. ein Signal, das den zu bestimmenden Messwert, aber mit weniger Störungen behaftet, beinhaltet.

Dieser geschätzte Systemzustand wird mit der Transitionsmatrix im Block 8 multipliziert und das Produkt $\hat{x}(k+2/k+1)$ einem Speicher 10 zugeführt. In Block 9 wird dieses Produkt noch mit dem Messvektor H multipliziert und das Ergebnis, das geschätzte Sensorsignal $\hat{z}(k+2)$, in einem Speicher 11 gespeichert. Danach wird der nächste Zyklus begonnen.

Durch die angenommene lineare Auslegung des Sensors 1, 2 kann hier der Verstärkungsvektor K als konstant angenommen, im voraus berechnet und im Block 6 gespeichert werden. Dieser konstante Vektor erhält den asymptotischen Wert von K(k) d.h. $K = \lim_{n \to \infty} (K(n))$.

Fig. 2 zeigt ein weiteres Ausführungsbeispiel.

Die Berechnungen sind hier in 5 Abschnitte I-V unterteilt. Diese Abschnitte sind durch waagerechte gestrichelte Linien in Fig. 2 eingetragen. Die Berechnungen beginnen in Abschnitt I und verlaufen über Abschnitte II, III, IV nach Abschnitt V. Nach Abschnitt V folgt im nächsten Zyklus wieder Abschnitt I.

Links unten in Fig. 2 sind Sensorteile, ein Zahnkranz 21 und ein Polstift 22 schematisch dargestellt. Die induzierte Sensor-Wechselspannung wird in einem Verstärker 23 verstärkt und in einem Wandler 24 digitalisiert. Diese digitalisierte Sensor-Wechselspannung wird nun Sensorsignal z(k + 1) genannt. In einem Subtrahierer 25 wird von dem Sensorsignal z(k + 1) ein simuliertes Sensorsignal $\hat{z}(k+1)$ aus einem Speicher 56 abgezogen. Dieses Differenzsignal $\tilde{z}(k+1)$ wird in einem Multiplizierer 26 mit dem einen Vektor K(k + 1) darstellenden Kalman-Verstärkungsfaktor multipliziert. Die Ausgangsgrösse ist ein Differenz-Vektor $\tilde{x}(k+1/k+1)$; dies ist ein Signalvektor, welcher aus mehreren separaten Signalen besteht. Im Addierer 27 wird zum Differenzvektor der simulierte Zustandsvektor $\hat{x}(k+1/k)$ vom Ausgang eines Speicher 57 addiert und damit der geschätzte Zustand des Rads $\hat{x}(k+1/k+1)$ gebildet. Dieses Signal beinhaltet die entstörte gesuchte Messgrösse. Durch Multiplikation des geschätzten Zustands mit dem Messvektor H(k + 1) erhält man das Messsignal, das der entstörten Radgeschwindigkeit entspricht.

Der Vektor K(k + 1) wird die Kalman-Verstärkung genannt. Die Verstärkungsfaktoren sind zeitabhängig und werden in Abhängigkeit von den Stör- und Messsignalen berechnet. Zur zeitabhängigen Berechnung der variablen Kalman-Verstärkungsfaktoren dienen die Abschnitte I - II und V.

Im Abschnitt I sind $\Phi^T$, $\Phi$ und $\Gamma\Omega\Gamma^T$ konstante Matrizen, wobei $\Phi^T$ die transponierte Matrix von $\Phi$ ist. P(k/k) ist eine variable Matrix. $\Phi^T$, aus einem Block 90, wird mit P(k/k) (im Block 31) multipliziert, und das Produkt anschliessend nochmals mit $\Phi$ in Block 32 multipliziert. Das Ergebnis wird im Addierer 33 zur Matrix $\Gamma\Omega\Gamma^T$ aus Block 34 addiert. Die Summe P(k + 1/k) wird in Blöcken 36 und 46 gespeichert. Damit ist die Berechnung in Abschnitt I abgeschlossen.

Im Abschnitt II sind H(k) und $P(k+1/k)H^T(k)$ variable Vektoren, P(k + 1/k) eine variable Matrix und R(k) ein variabler Skalar. Der Vektor $H^T(k)$ aus Block 35 wird mit der Matrix P(k + 1/k) des Blocks 36 multipliziert und das Ergebnis wird im Block 41 gespeichert, bzw. mit H(k) im Block 37 multipliziert. Der Ausgang des Blocks 37 ist ein Skalar, der in einen Block 39 zum Skalar R(k) aus Block 18 addiert wird. In einem Block 40 wird der Reziprokwert dieser Summe $S_u$ gebildet. Die Berechnungen in Abschnitt II werden abgeschlossen mit der Multiplikation der Skalarreziproken mit dem Vektor $P(k+1/k)H^T(K)$ aus Block 41 und mit der Speicherung des Produkts K(k + 1) in Blöcken 43 und 26.

In Abschnitt III ist I eine konstante Einheitmatrix; P(K + 1/k) und I - K(k + 1)H(k) sind variable Matrizen. H(k) und K(k + 1) sind variable Vektoren. Der Vektor H(k) aus Block 42 wird mit dem Vektor K(k + 1) in Block 43 multipliziert und das Produkt, eine Matrix, von der konstanten Matrix I aus Block 44 im Block 45 subtrahiert. Die Differenz I - K(k + 1)H(k) wird in einem Speicher 58 gespeichert. Danach wird die Matrix P(k + 1/k) aus Block 46 mit dieser Differenzmatrix in Block 58 multipliziert und das Ergebnis P(k + 1/k + 1) in dem Block 31 abgespeichert.

Nach Abschluss der bereits geschilderten Berechnungen in Abschnitt IV wird in Abschnitt V der geschätzte Zustand $\hat{x}(k+1/k+1)$ im Block 47 mit einem Vektor S multipliziert und das Produkt, ein Skalar, im Addierer 48 zu dem Skalar $R_o$ des Blocks 49 addiert. Die Summe R(k + 1) wird in Block 38 gespeichert. Weiter wird noch der Vektor H(k + 1) berechnet. Dazu wird das simulierte Sensorsignal $\hat{z}(K+1)$ und der geschätzte Zustand $\hat{x}(k+1/k+1)$ herangezogen. In einem Block 50 ist das simulierte Sensorignal $\hat{z}(k+1)$ gespeichert. Dieses wird im Block 52 mit dem Vektor M(k + 1) multipliziert. Der Vektor M(k + 1) wird aus dem geschätzten Zustand $\hat{x}(k+1/k+1)$, der im Speicher 51 abgespeichert ist, und aus den konstanten Skalaren $\omega_o$ (Block 53), A (Block 54), und NZ (Block 55) berechnet. Das Produkt ist der neue Vektor H(k + 1), der in den Blöcken 29, 35, 37 und 42 eingespeichert wird. Der geschätzte Zustand $\hat{x}(k+1/k+1)$ wird noch in Block 28 mit der Transitionsmatrix $\Phi$, welche das Radverhalten simuliert, multipliziert. Der Ausgang ist dann der simulierte Radzustand $\hat{x}(k+2/k+1)$. In Block 29 wird der simulierte Radzustand $\hat{x}(k+2/k+1)$ mit dem Messvektor H(k + 1) multipliziert, um das simulierte Sensorsignal $\hat{z}(k+2)$ für die Speicher 50 und 56 zu erhalten.

Erst wenn der nächste Zyklus anfängt, wird der A/D-Wandler 24 angestossen und der neue Wert des Sensorsignals z(k + 2) gespeichert. Die Frequenz des A/D-Wandlers muss also an der Rechengeschwindigkeit des gesamten Rechenwertes angepasst sein. Um jedoch eine akzeptable Zahl der Abtastpunkte innerhalb einer Signalperiode zu erreichen, muss die Abtastfrequenz hoch genug gewählt werden. Wenn davon ausgegangen wird, dass der Zahnkranz 50 Zähne hat, und dass die maximale Drehzahl des Rades 60 Umdrehungen pro Sekunde nicht überschreitet, muss die Abtastfrequenz mindestens 6 KHz betragen, um auch bei höchster Geschwindigkeit eine sichere Funktion des Filters zu gewährleisten. Dies bedeutet wiederum, dass der Rechner die Berechnungen eines Zyklus innerhalb von 0,16 Millisekunden ausführen muss. Nach diesem Kriterium ist der Rechner zu wählen. Bei niedrigeren Drehzahlen und bei niedrigeren Zähnezahlen kann die Abtastfrequenz entsprechend geringer gewählt werden.

In der Fig. 1 und 2 stellen die einfach gezeichneten Verbindungen zwischen den Blöcken Einfachverbindungen, die doppelt gezeichneten Verbindungen Mehrfachverbindungen dar. Die einzelnen Matrizen und Vektoren sind im Anhang II aufgelistet. Die Bezeichnungen für die einzelnen verwendeten Symbole sind im Anhang I angegeben.

*Beispiele*

In Fig. 3 und Fig.4 sind Diagramme gezeigt. In beiden Figuren ist die obere Kurve die Sensorspannung nach dem A/D-Wandler, wobei die digitalen Werte linear miteinander verbunden sind. Die Kurven sind Messaufnahmen. Unterhalb der Sensorspannung ist die vom Kalman-Filter ausgerechnete Randumfangsgeschwindigkeit gezeichnet. Fig. 3 zeigt das Ergebnis bei einer hohen Abtastrate, während Fig. 4 das Ergebnis bei einer niedrigen Abtastrate zeigt. In beiden Berechnungen ist im Vektor S R1 = 0 gewählt.

Im Beispiel der Fig. 3 blockiert das Rad zwischen 90 und 300 Millisekunden. Das Kalman-Filter zeigt dies auch recht zufriedenstellend an. Die starke Schwingung in der Geschwindigkeit am Anfang der Filterung ist das Einschwingen des Kalman-Filters.

Im Beispiel von Fig. 4 blockiert das Rad zwischen 110 und 210 Millisekunden. Auch hier funktioniert das Kalman-Filter zufriedenstellend trotz der niedrigen Abtastrate.

Es folgen Erläuterungen zu den Berechnungen des Kalman-Filters. Der geschätzte Zustand des Systems ist:

$X_1$ = Rad-Drehwinkel
$X_2$ = Rad-Drehgeschwindigkeit
$X_3$ = Rad-Drehmoment
$X_4$ = Reziproke des Sensor-Spaltabstands

Die Systemgleichungen lauten:

$$\dot{X}_1 = X2$$
$$\dot{X}_2 = X3/J$$
$$\dot{X}_3 = W1$$
$$\dot{X}_4 = W2$$

wobei $W_1$ und $W_2$ die Rauschpegel des Rad-Drehmoments bzw. Reziproken des Sensor-Spaltabstandes sind.

Die diskrete Sytemlösung lautet:

$$x(k+1) = \Phi\,(k+1/k) \cdot x(k) + \Gamma\,(k+1/k) \cdot W(k)$$

wobei

$$w(k) = \begin{vmatrix} 0 \\ 0 \\ W_1\ (k) \\ W_2\ (k) \end{vmatrix} \quad \text{ist.}$$

Das Sensorsignal stellt sich wie folgt dar:

$$z = x_4 \cdot \sin\,(x_1 \cdot NZ)\,(1\text{-}e^{\frac{x_2}{\omega_o}})(1 + A\,x_2) + r(t)$$

wobei r(t) das Störsignal im Messsignal ist.

Diese Gleichung bildet den generellen Verlauf der Sensorspannung mit Zähnezahl NZ, der Reziproken des Spaltabstandes $x_4$ und mit der Drehzahl $x_2$ ab. Die Abhängigkeit der Wechselspannungsamplitude $U_{ss}$ in Abhängigkeit von der Raddrehzahl $\omega$ und dem Spaltabstand s zeigt Fig. 5.

Das diskrete Sensorsignal ist:

$$z(k+1) = H(k) \cdot x(k+1) + r(k)$$

Die Radbeschleunigung b(k) ergibt sich zu

$$b\,(k) = x_3\,(k)/J$$

Man kann also hier auch in einfacher Weise die Radbeschleunigung ermitteln.

SCHÄTZALGORITHMUS

Kovarianzmatrix:

$$P(k+1/k) = \Phi \cdot P(k/k) \cdot \Phi^T - \Gamma \cdot Q \cdot \Gamma^T$$

Kalmanverstärkung:

$$K(k+1) = P(k+1/k) \cdot H^T(k) \cdot [H(k) \cdot P(k+1/k) \cdot H^T(k) + R(k)]^{-1}$$

Kovarianzmatrix:

$$P(k+1/k+1) = [I - K(k+1) \cdot H(k)] \cdot P(k+1/k)$$

Systemzustand:

$$\hat{x}(k+1/k+1) = \Phi \cdot \hat{x}(k+1/k) + K(k+1/k) \cdot [z(k+1) - H(k) \cdot \Phi \cdot \hat{x}(k/k)]$$

*Anhang I*

Benennungen der verwendeten Grössen

| | |
|---|---|
| T | Zykluszeit |
| J | Trägheitsmoment der Regelstrecke (Rad) |
| $Q_1$ | Varianz des Moments |
| $Q_2$ | Varianz der Reziproken des Spaltabstands |
| R | Varianz des Sensorsignalrauschens |
| $X_1$ | geschätzter Zustand Raddrehwinkel |
| $X_2$ | geschätzter Zustand Raddrehgeschwindigkeit |
| $X_3$ | geschätzter Zustand Raddrehmoment |
| $X_4$ | geschätzter Zustand des reziproken Sensor-Spaltabstands |
| $R_o$ | Grundvarianz des Sensorsignalrauschens |
| $W_o$ | Sensorkonstante (ermittelbar aus Fig. 5) |
| A | Sensorkonstante (ermittelbar aus Fig. 5) |
| NZ | Zähnezahl des Rotors des Sensors |
| $R_1$ | Sensorkonstante (geschwindigkeitsabhängige Varianz des Sensorsignalrauschens) |
| $P_1$, $P_2$, $P_3$, $P_4$ | Anfangsvarianzen der Zustandsvariablen |
| $W_1$ | Rauschpegel des Raddrehmoments |
| $W_2$ | Rauschpegel der Reziproken des Sensor-Spaltabstands |
| r(t) | Störsignal im Messsignal |
| b(k) | Radbeschleunigung |

Die Varianzen müssen geschickt gewählt werden.

*Anhang II*

1) Belegung der konstanten Blöcke

Im folgenden ist T die Zykluszeit, J das Trägheitsmoment des Rads um seine Achse, $Q_1$ die Varianz des Moments auf das Rad um die Radachse, $Q_2$ die Varianz der Reziproken des Spaltes zwischen Polstift und Zahnkranz des Sensors, R die Varianz des Sensorsignalrauschens; $x_1$ - $x_4$ ist der geschätzte Zustand des Rads. Der Superscript T zu einer Matrix oder einem Vektor bedeutet die transponierte Matrix bzw. Vektor (z.B. $\Phi^T$).

1.1: Transitionsmatrix $\emptyset$ des Systems

$$\Phi = \begin{vmatrix} 1 & T & T/(2J) & 0 \\ 0 & 1 & T/J & 0 \\ 0 & 0 & 1 & 0 \\ 0 & 0 & 0 & 1 \end{vmatrix}$$

1.2: Matrix des Blocks 34 $(\Gamma \cdot Q \cdot \Gamma^T)$ ergibt sich aus

$$\Gamma = \begin{vmatrix} T & T/(2J) & T/(6J) & 0 \\ 0 & T & T/(2J) & 0 \\ 0 & 0 & T & 0 \\ 0 & 0 & 0 & T \end{vmatrix}$$

$$Q = \begin{vmatrix} 0 & 0 & 0 & 0 \\ 0 & 0 & 0 & 0 \\ 0 & 0 & Q1 & 0 \\ 0 & 0 & 0 & Q2 \end{vmatrix}$$

1.3: Identitätsmatrix I

$$I = \begin{vmatrix} 1 & 0 & 0 & 0 \\ 0 & 1 & 0 & 0 \\ 0 & 0 & 1 & 0 \\ 0 & 0 & 0 & 1 \end{vmatrix}$$

1.4: Konstanten

Block (29): $R_o$ (Grundvarianz des Sensorsignalrauschens)
Block (33): $W_o$ (Sensorkonstante)
Block (34): A (Sensorkonstante)
Block (35): NZ (Zähnezahl)

1.5: Vektor S

$$S = \begin{vmatrix} 0 \\ R1 \\ 0 \\ 0 \end{vmatrix}$$

2) Belegung der variablen Blöcke

2.1: Transponierter Messvektor $H^T$

$$H^T = \begin{matrix} NZ \cot(NZ \cdot x_1) \\ \dfrac{1}{\omega_o \cdot (e^{\frac{x_2}{\omega_o}} - 1)} + \dfrac{1}{1 + A x_2} \\ 0 \\ \dfrac{1}{x_4} \end{matrix}$$

2.2: Anfangswert des Blocks 31

$$P(0/0) = \begin{vmatrix} P_1 & 0 & 0 & 0 \\ 0 & P_2 & 0 & 0 \\ 0 & 0 & P_3 & 0 \\ 0 & 0 & 0 & P_4 \end{vmatrix}$$

wobei $P_1$ - $P_4$ die Anfangsvarianzen der Zustandsvariablen sind.

**Patentansprüche**

1. Verfahren zur Umwandlung eines in seiner Amplitude und Frequenz von einer zu ermittelnden, sich ändernden Drehgeschwindigkeit abhängigen, störbehafteten sinusförmigen Ausgangssignals eines Drehgeschwindigkeit-Messwertgebers (1, 2; 21, 22) in ein störungsarmes Signal mit Hilfe eines Filters, dadurch gekennzeichnet, dass ein Kalman-Filter in der Weise zum Einsatz kommt,

a) dass in vorgegebenen Zeitabständen die Differenz zwischen dem Ausgangssignal (Z(k+1)) des Messwertgebers und einem im Kalman-Filter aufgrund der vorhergehenden Messung ermittelten Simulationswert $(\hat{z}(k+1))$ gebildet wird,

b) dass die Differenz $(\tilde{Z}(k+1))$ jeweils durch Multiplikation mit einem einen Vektor darstellenden Kalman-Verstärkungsfaktor K in einen Differenzvektor $\tilde{x}(k+1/k+1)$ umgewandelt wird,

c) dass die Summe dieses Differenzvektors $\tilde{x}(k+1/k+1)$ und eines Simulationsvektors $\hat{x}(k+1/k)$ gebildet wird,

d) dass dieser Summenvektor $\hat{x}(k+1/k+1)$, der das gewünschte störungsarme Signal beinhaltet, nach Multiplikation mit einer Transitionsmatrix $\emptyset$ in einem Speicher als Simulationsvektor $\hat{x}(k+2/k+1)$ für die folgende Summenbildung abgespeichert wird,

e) und dass der Simulationsvektor $\hat{x}(k+2/k+1)$ nach Multiplikation mit einem Messvektor H als Simulationswert $\hat{z}(k+2)$ für die folgende Messung abgespeichert wird,

wobei die Klammerausdrücke (k+m) bzw. (k+m/k+n) anzeigen, dass die entsprechende Grösse im Auswertungstakt (k+m) verwendet wird und im Auswertungstakt (k+n) gewonnen wurde, wobei die Transitionsmatrix $\Phi$ und der Messmatrixvektor $H^T$ sich aus Anhang II ergeben und wobei T die Zykluszeit und J das Trägheitsmoment der Regelstrecke ist.

2. Verfahren nach Anspruch 1, dadurch gekennzeichnet, dass der Kalman-Verstärkungsfaktor ein vorausberechneter und konstanter Vektor K ist.

3. Verfahren nach Anspruch 1, dadurch gekennzeichnet, dass der Kalman-Verstärkungsfaktor K(k+m) jeweils gemäss folgendem Verfahren ermittelt wird:

a) die transponierte Transitionsmatrix $\emptyset^T$ wird mit der im Vorzyklus ermittelten Kovarianzmatrix P(k/k) multipliziert und dieses Produkt wird mit der Transitionsmatrix $\emptyset$ multipliziert,

b) dieses Produkt wird zu einer konstanten Matrix $\Gamma \cdot Q \cdot \Gamma^T$ addiert, um eine Voraussage für die neue Konvarianzmatrix P(k+1/k) zu erhalten,

c) nach Multiplikation dieser Voraussage mit dem transponierten variablen Messvektor $H^T(k)$ wird der entstehende Vektor $P(k+1/k) \cdot H^T(k)$ einerseits gespeichert und anderseits mit dem Messvektor H(k) multipliziert,

d) der dabei entstehende Skalar wird dann zu einem weiteren variablen Skalar R(k) addiert und von der entstehenden Summe $S_u$ der Reziprokwert gebildet,

e) mit diesem Reziprokwert wird der gespeicherte Vektor $P(k+1/k) \cdot H^T(k)$ multipliziert, wodurch sich der Kalman-Verstärkungsvektor K(k+1) ergibt,

f) dieser wird einerseits zur Multiplikation mit der Differenz $\tilde{Z}(k+1)$ benutzt und andererseits mit dem variablen Messvektor H(k) multipliziert,

g) das entstehende Produkt $K(k+1) \cdot H(k)$ wird von einer konstanten Matrix I abgezogen,

h) diese Differenz $I - K(k+1) \cdot H(k)$ wird mit der gemäss b) ermittelten Voraussage für die Kovarianzmatrix $P(k+1/k)$ multipliziert und das Produkt als neu ermittelte Kovarianzmatrix $P(k+1/k+1)$ für den folgenden Zyklus zur Verfügung gestellt,

i) der variable Skalar $R(k+1)$ für den folgenden Zyklus wird durch Multiplikation des Simulationsvektors $\hat{x}(k+1/k+1)$ mit einem konstanten Vektor S und Addition eines Skalars $R_0$ zu dem durch die Multiplikation erhaltenen Skalar $\hat{x}(k+1/k+1) \cdot S$ gewonnen,

k) die variablen Messvektoren $H(k+1)$ für den folgenden Zyklus werden durch Multiplikation des ermittelten Simulationswertes $\hat{z}(k+1)$ mit einem Vektor $M(k+1)$ gewonnen, wobei sich der Vektor $M(k+1)$ aus dem geschätzten Zustand $\hat{x}(k+1/k+1)$ und den konstanten Skalaren $\omega_0$, A und NZ ergibt.

4. Verfahren nach einem der Ansprüche 1 bis 3, dadurch gekennzeichnet, dass die Radbeschleunigung b(k) aus der Beziehung

$$\hat{b}(k) = \hat{x}_3(k/k)/J$$

ermittelt wird, wobei sich $x_3$ aus $\hat{x}(k/k)$ ergibt.

## Claims

1. Process for the conversion of a sinusoidal output signal of a rate-of-rotation measured-value generator (1, 2; 21, 22), the amplitude and frequency of which output signal are a function of a varying rate of rotation to be determined and which output signal is susceptible to interference, into a low-interference signal by means of a filter, characterized in that a Kalman filter is employed in such a manner

a) that the difference between the output signal $(Z(k+1))$ of the measured-value generator and a simulation value $(\hat{z}(k+1))$ determined in the Kalman filter on the basis of the preceding measurement is formed at predetermined time intervals,

b) that this difference $(\tilde{Z}(k+1))$ is converted into a difference vector $\tilde{x}(k+1/k+1)$ in each instance by multiplication by a Kalman amplification factor K representing a vector,

c) that the sum of this difference vector $\tilde{x}(k+1/k+1)$ and a simulation vector $\hat{x}(k+1/k)$ is formed,

d) that this sum vector $\hat{x}(k+1/k+1)$, which contains the desired low-interference signal, is stored, after multiplication by a transition matrix $\emptyset$, in a store as simulation vector $\hat{x}(k+2/k+1)$ for the following sum formation,

e) and that the simulation vector $\hat{x}(k+2/k+1)$ is stored, after multiplication by a measurement vector H, as simulation value $\hat{z}(k+2)$ for the following measurement,

the bracketed expressions $(k+m)$ and $(k+m/k+n)$ indicating that the corresponding quantity is employed in the evaluation cycle $(k+m)$ and was obtained in the evaluation cycle $(k+n)$, the transition matrix $\Phi$ and the measurement matrix vector $H^T$ emerging from Appendix II, and T being the cycle time and J the moment of inertia of the control path.

2. Process according to claim 1, characterized in that the Kalman amplification factor is a previously computed and constant vector K.

3. Process according to claim 1, characterized in that the Kalman amplification factor $K(k+m)$ is determined in each instance in accordance with the following process:

a) the transposed transition matrix $\emptyset^T$ is multiplied by the convariance matrix $P(k/k)$ determined in the previous cycle, and this product is multiplied by the transition matrix $\emptyset$,

b) this product is added to a constant matrix $\Gamma \cdot Q \cdot \Gamma^T$, in order to obtain a prediction for the new covariance matrix $P(k+1/k)$,

c) after multiplication of this prediction by the transposed variable measurement vector $H^T(k)$, the vector $P(k+1/k) \cdot H^T(k)$ which is obtained is on the one hand stored and on the other hand multiplied by the measurement vector H(k),

d) the scalar thus obtained is then added to a further variable scalar R(k), and the reciprocal of the sum $S_u$ which is obtained is formed,

e) the stored vector $P(k+1/k) \cdot H^T(k)$ is multiplied by this reciprocal, whereby the Kalman amplification vector $K(k+1)$ is obtained,

f) the latter is on the one hand used for the multiplication by the difference $\tilde{Z}(k+1)$ and on the other hand multiplied by the variable measurement vector H(k),

g) the product $K(k+1) \cdot H(k)$ which is obtained is subtracted from a constant matrix I,

h) this difference $I - K(k+1) \cdot H(k)$ is multiplied by the prediction, determined in accordance with b), for the covariance matrix $P(k+1/k)$, and the product is made available as a newly determined covariance matrix $P(k+1/k+1)$ for the following cycle,

i) the variable scalar $R(k+1)$ for the following cycle is obtained by multiplication of the simulation vector $\hat{x}(k+1/k+1)$ by a constant vector S and addition of a scalar $R_0$ to the scalar $\hat{x}(k+1/k+1) \cdot S$ obtained by the multiplication,

k) the variable measurement vectors $H(k+1)$ for the following cycle are obtained by multiplication of the determined simulation value $\hat{z}(k+1)$ by a vector $M(k+1)$, the vector $M(k+1)$ being obtained from the estimated condition $\hat{x}(k+1/k+1)$ and the constant scalars $\omega_0$, A and NZ.

4. Process according to one of claims 1 to 3, characterized in that the wheel acceleration b(k) is determined from the relation

$$\hat{b}(k) = \hat{x}_3(k/k)/J$$

$x_3$ being determined from $\hat{x}(k/k)$.

## Revendications

1. Procédé pour convertir en un signal à faible bruit, à l'aide d'un filtre un signal de sortie d'un émetteur de la valeur mesurée d'une vitesse de rotation, signal dont l'amplitude et la frequence sont fonction d'une vitesse de rotation, variable, à établir, caractérisé en ce que l'on met en oeuvre un filtre Kalman de la façon suivante,

a) à des intervalles de temps prescrits, on forme la différence entre le signal de sortie $(Z(k+1))$ de l'émetteur de la valeur de mesure et une valeur de simulation $(\hat{z}(k+1))$ établie dans le filtre Kalman sur la base de la mesure précédente,

b) on convertit respectivement cette différence $(\tilde{Z}(k+1))$ en un vecteur de différence $\tilde{x}(k+1/k+1)$ en la multipliant par un facteur d'amplification de Kalman K représentant un vecteur,

c) on forme la somme du vecteur de différence $\tilde{x}(k+1/k+1)$ et d'un vecteur de simulation $\hat{x}(k+1/k)$,

d) après multiplication par une matrice de transition $\emptyset$, on mémorise ce vecteur de sommation $\hat{x}(k+1/k+1)$, qui contient le signal désiré à faible bruit, dans une mémoire, sous forme d'un vecteur de simulation $\hat{x}(k+2/k+1)$ pour la formation suivante de la somme,

e) et, après multiplication avec un vecteur de mesure H, on mémorise le vecteur de simulation $\hat{x}(k+2/k+1)$ sous forme de valeur de simulation $\hat{z}(k+2)$ pour la mesure suivante,

étant précisé que les expressions entre parenthèses $(k+m)$ et $(k+m/k+n)$ indiquent que la valeur correspondante est utilisée à la période d'horloge $(k+m)$ du traitement et qu'elle est obtenue à la période d'horloge $(k+n)$ du traitement, étant précisé que la matrice de transition $\Phi$ et le vecteur de la matrice de mesure $H^T$ sont donnés sur l'annexe II et étant précisé que T est la durée du cycle et que J est le moment d'inertie de la longueur de régulation de la roue.

2. Procédé selon la revendication 1, caractérisé en ce que le facteur d'amplification de Kalman est un vecteur calculé à l'avance et constant K.

3. Procédé selon la revendication 1, caractérisé en ce que le facteur d'amplification de Kalman K $(k+m)$ est chaque fois établi selon le procédé suivant:

a) on multiple la matrice de transition transposée $\emptyset^T$ par la matrice de covariance $P(k/k)$ établie dans le cycle précédent et on multiplie ce produit par la matrice de transition $\emptyset$,

b) on ajoute ce produit à une matrice constante $\Gamma \cdot Q \cdot \Gamma^T$ pour obtenir une valeur présumée pour la nouvelle matrice de covariance $P(k+1/k)$,

c) après multiplication de cette valeur présumée par le vecteur de mesure transposé $H^T(k)$, d'une part on mémorise le vecteur obtenu $P(k+1/k) \cdot H^T(k)$ et d'autre part on le multiplie par le vecteur de mesure $H(k)$,

d) on ajoute alors le scalaire ainsi obtenu à un autre scalaire variable $R(k)$ et à partir de la somme obtenue $S_u$ on forme la valeur réciproque,

e) on multiplie par cette valeur réciproque le vecteur mémorisé $P(k+1/k) \cdot H^T(k)$, ce qui donne le vecteur d'amplification de Kalman $K(k+1)$,

f) d'une part on utilise ce vecteur pour le multiplier avec la différence $\tilde{Z}(k+1)$ et d'autre part on le multiplie par le vecteur de mesure variable $H(k)$,

g) on soustrait le produit obtenu $K(k+1) \cdot H(k)$ d'une matrice constante I,

h) on multiplie cette différence $I - K(k+1) \cdot H(k)$ par la valeur présumée établie selon b), pour la matrice de covariance $P(k+1/k)$ et on dispose du produit comme nouvelle matrice de covariance établie $P(k+1/k+1)$ pour le cycle suivant.

i) on obtient le scalaire variable $R(k+1)$ pour le cycle suivant en multipliant le vecteur de simulation $\hat{x}(k+1/k+1)$ avec un vecteur constant S et en ajoutant un scalaire $R_0$ au scalaire résultant de la multiplication $\hat{x}(k+1/k+1) \cdot S$,

k) on obtient les vecteurs de mesure variables $H(k+1)$ pour le cycle suivant en multipliant la valeur de simulation obtenue $\hat{z}(k+1)$ avec un vecteur $M(k+1)$, étant précisé que le vecteur $M(k+1)$ s'obtient à partir de l'état estimé $\hat{x}(k+1/k+1)$ et des scalaires constants $\omega_0$, A et NZ.

4. Procédé selon l'une des revendications 1 à 3, caractérisé en ce que l'on établit l'accélération de la roue $b(k)$ à partir de la relation

$$\hat{b}(k) = \hat{x}_3(k/k)/J$$

étant précisé que $x_3$ s'obtient à partir de $\hat{x}(k/k)$.

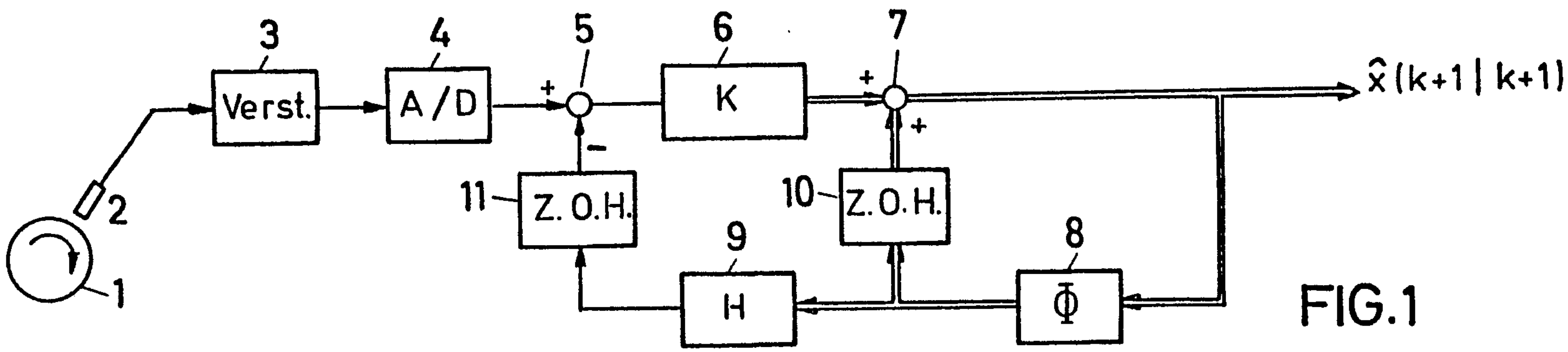


FIG.1

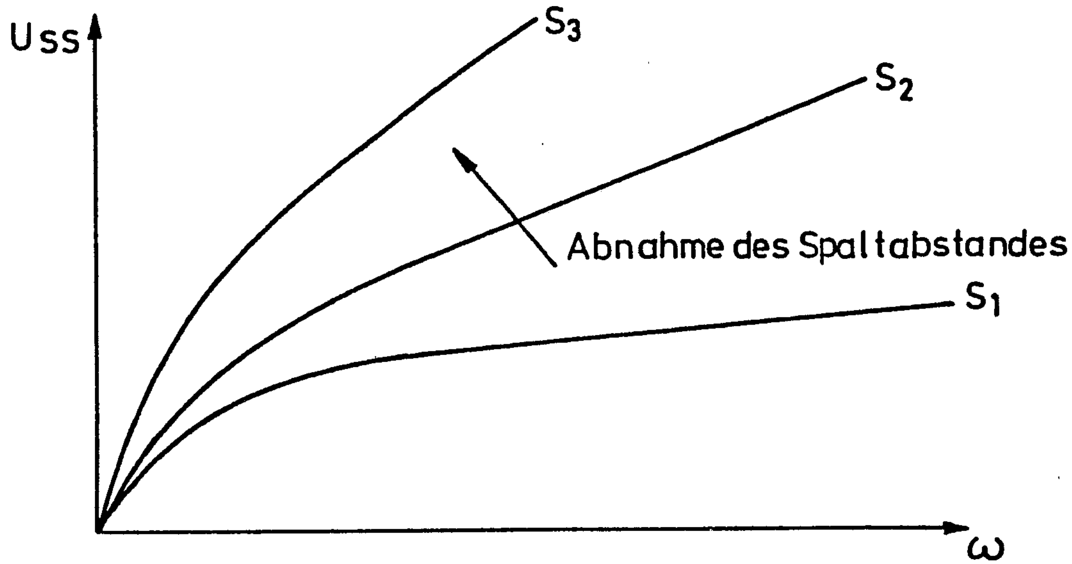


Wechselspannungsamplitude $U_{SS}$ in Abhängigkeit von Raddrehzahl ω und Spaltabstand S

FIG.5

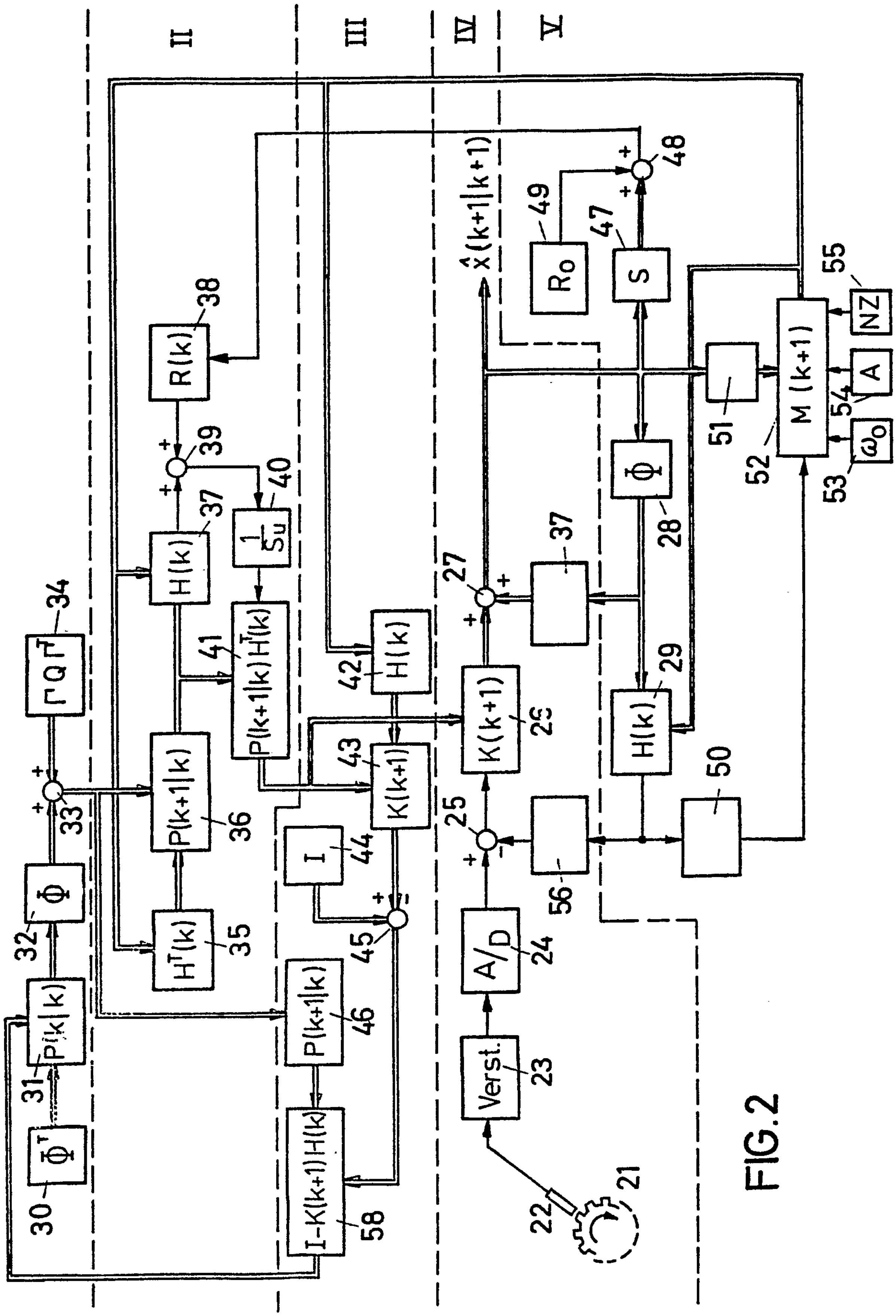
II
III
IV
V
R(k)
H(k)
1/Su
P(k+1|k)H^T(k)
ΓQΓ^T
P(k+1|k)
H^T(k)
Φ
P(k|k)
Φ^T
P(k+1|k)
I-K(k+1)H(k)
I
K(k+1)
H(k)
K(k+1)
A/D
Verst.
x̂(k+1|k+1)
Ro
S
Φ
H(k)
M(k+1)
NZ
A
ω0
21
22
23
24
25
27
28
29
30
31
32
33
34
35
36
37
38
39
40
41
42
43
44
45
46
47
48
49
50
51
52
53
54
55
56
58

FIG.2

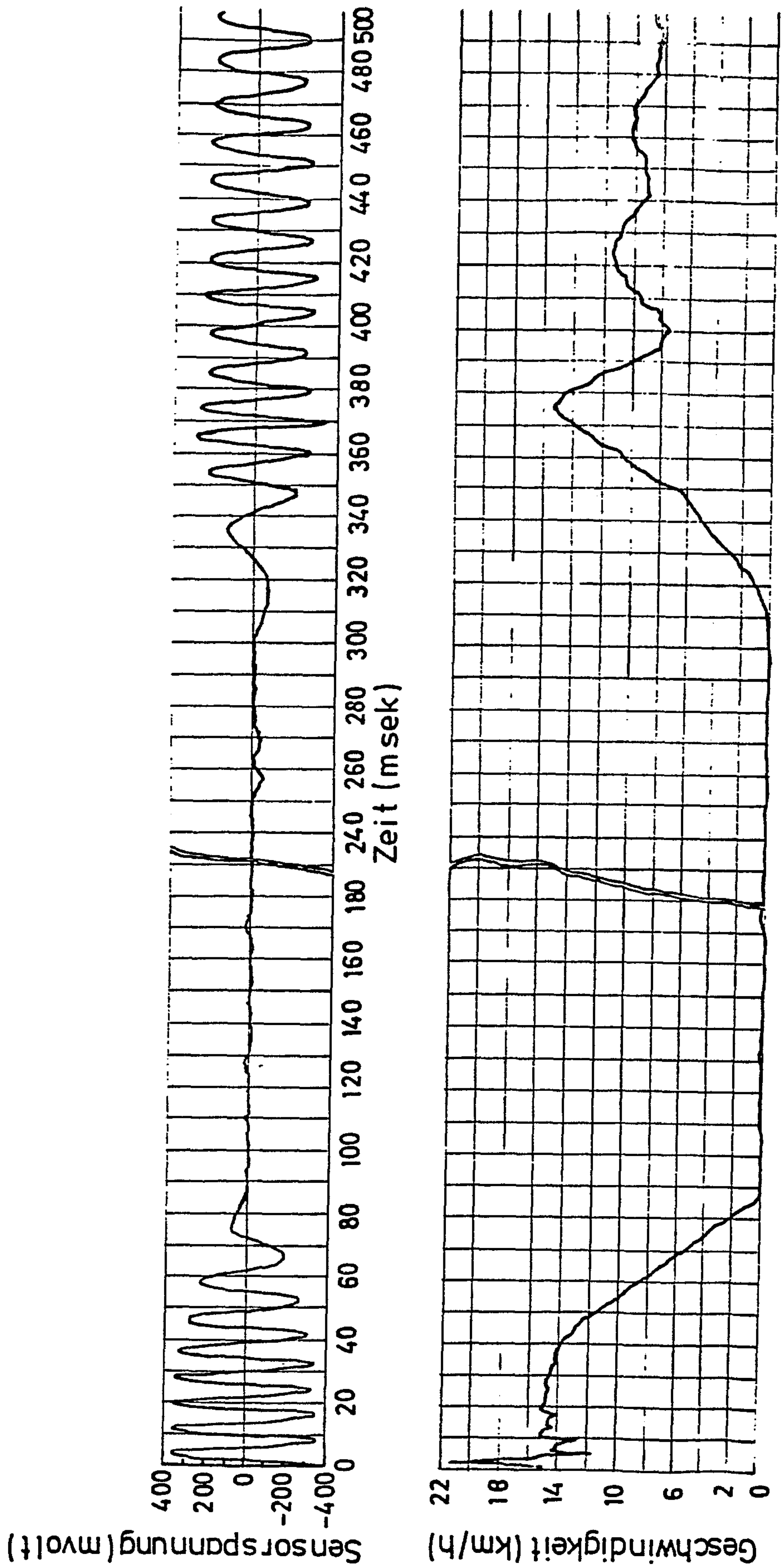
Sensorspannung (mvolt)
400
200
0
-200
-400
Geschwindigkeit (km/h)
22
18
14
10
6
2
0
0
20
40
60
80
100
120
140
160
180
240
260
280
300
320
340
360
380
400
420
440
460
480
500
Zeit (msek)

FIG.3

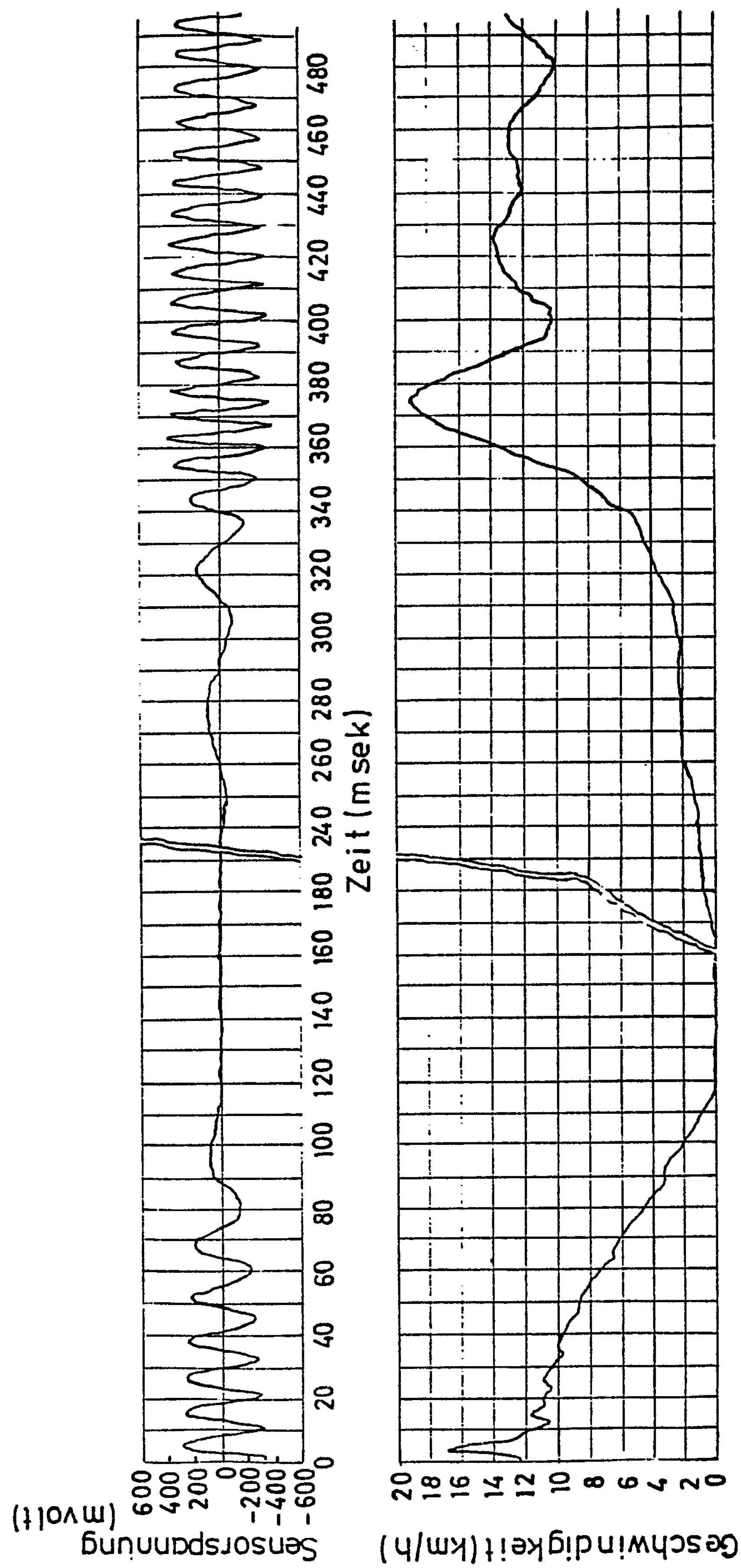
Sensorspannung (mvolt)
600
400
200
0
-200
-400
-600
Geschwindigkeit (km/h)
20
18
16
14
12
10
8
6
4
2
0
Zeit (msek)
0
20
40
60
80
100
120
140
160
180
240
260
280
300
320
340
360
380
400
420
440
460
480

FIG. 4